# EUROPÄISCHE PATENTSCHRIFT

(11) **EP 1 306 563 B1**
(45) Veröffentlichungstag und Bekanntmachung des Hinweises auf die Patenterteilung: **07.06.2006**
(21) Anmeldenummer: 02024403.4
(22) Anmeldetag: 28.10.2002
(51) Int. Cl.: F16B 39/02, F15B 15/08

(54) **Stoppelement zur Montage an einer Stange**
Stop element for mounting on a rod
Butée pour montage sur une tige

(30) Priorität: 29.10.2001 DE 10153343
(43) Veröffentlichungstag der Anmeldung: 02.05.2003
(73) Patentinhaber: Bosch Rexroth Teknik AB, 125 81 Stockholm (SE)
(72) Erfinder: Essinger, Jakob, 125 53 Älvsjö (SE)
(74) Vertreter: Maiwald Patentanwalts GmbH

(56) Entgegenhaltungen:
- EP-A- 1 186 785
- DE-A- 10 055 231
- US-A- 4 646 623

## Beschreibung

Die vorliegende Erfindung betrifft ein Stoppelement oder ein Anschlagelement zur Montage an einer Stange, um einen verstellbaren Anschlag entlang der Stange zu schaffen, wobei das Stoppelement im wesentlichen aus einem ringförmigen Metallelement mit einer glatten oder mit einem Gewinde versehenen Innenfläche besteht. Weiterhin betrifft die vorliegende Erfindung eine Lineareinheit sowie einen Pneumatikzylinder zur Erzeugung einer mechanischen Kraft mit einer Anschlagstange bzw. Kolbenstange, auf welcher das besagte Stoppelement angeordnet ist.

Ein gattungsgemäßes Stoppelement ist aus dem Fachbuch "DUBBEL-Taschenbuch für den Maschinenbau" (Springer-Verlag, 20. Auflage 2001, Seite G28) bekannt. Das hier so bezeichnete Klemmelement besteht aus einem Metallelement, welches mit einer zentralen Durchgangsbohrung zur Befestigung des Metallelements an einer Stange versehen ist. Die Durchgangsbohrung des Metallelements besitzt eine glatte Innenfläche, die an einer ebenfalls glatten Außenfläche der Stange zur Anlage kommt. Weiterhin ist die Durchgangsbohrung des Metallelements mit einem Radialschlitz versehen, um eine Klemmverbindung unter zusätzlicher Verwendung einer Schraube zu schaffen. Der Radialschlitz verläuft ausgehend von der radialen Außenfläche des ringförmigen Metallelements zu seiner radialen Innenfläche. Damit wird über das Metallelement eine kraftschlüssige Verbindung mittels Reibung geschaffen. Derartige Metallelemente sind auf dem Gebiet pneumatischer Aktoren weit verbreitet, beispielsweise bei Pneumatikzylindern oder pneumatischen Linearantrieben.

Die DE 196 49 27 A1 offenbart einen pneumatischen Linearantrieb, der einen Pneumatikzylinder mit einer Kolbenstange umfasst. Die Kolbenstange steht koaxial mit einem innenliegenden Kolben des Pneumatikzylinders in Verbindung, worüber eine linear gerichtete Kraft in Abhängigkeit mit einer wechselseitigen Beaufschlagung des innenliegenden Kolbens generierbar ist. Die Kolbenstange steht koaxial mit einem Rohrelement in Verbindung. Zum Rohrelement gehört eine bewegbare Halteanordnung zum Stoppen der Linearbewegung der Kolbenstange an zumindest einer definierten Position. Die Halteanordnung ist am Rohrelement über mehrere Schrauben befestigt. Die bewegbare Halteanordnung wirkt mit einer Anschlagstange zusammen, die parallel zum Pneumatikzylinder angeordnet ist. Die Anschlagstange ist hier als Gewindestange ausgebildet, auf welcher mehrere Anschlagmuttern aufgeschraubt sind, um einen verstellbaren Anschlag für die Halteanordnung zu schaffen. Jede Anschlagmutter ist über eine zusätzliche Kontermutter fixierbar, um ein selbsttätiges Lösen der Anschlagmutter zu vermeiden. Diese Art von Stoppelementen erfordert zwingend eine zusätzliche Kontermutter, um bei Vibrationen der korrespondierenden Stange einen festen Sitz zu gewährleisten.

Es ist die Aufgabe der vorliegenden Erfindung ein Stoppelement zur Montage auf einer Stange zu schaffen, welches leicht herstellbar ist und welches als zuverlässiger Anschlag auch unter Vibration verwendbar ist.

Die Aufgabe wird ausgehend von einem Stoppelement gemäß des Oberbegriffs von Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass ein Stoppelement mit zumindest einem durchgängigen Schlitz versehen ist, welcher im wesentlichen parallel zur Längsachse des Stoppelements oder der korrespondierenden Stange verläuft. Der zum durchgängigen Schlitz benachbart angeordnete deformierbare innerer Wandbereich ist gegen die Außenfläche der Stange drückbar, was über eine radial in einen äußeren Wandbereich einschraubbare Schraube erfolgt.

Für die erfindungsgemäße Lösung sind damit lediglich zwei einfach zu fertigende Teile, nämlich das Stoppelement und die Schraube, erforderlich. Als Schraube kann ein herkömmliches Massenprodukt verwendet werden. Das ringförmige Stoppelement ist aus einem runden Rohrabschnitt auf einfache Weise fertigbar. Die durchgängigen Schlitze des Stoppelements können vorteilhafterweise durch Wasserschneiden, Fräsen oder einer anderen geeigneten Produktionstechnologie hergestellt werden. Durch die Verbindungsart der Kraftübertragung durch Reibung ist das erfindungsgemäße Stoppelement insbesondere in vibrationsreichen Umgebungen einsetzbar.

Vorzugsweise besitzt der durchgängige Schlitz eine an den Querschnitt des Stoppelements angepasste Kurvenform, wobei zur Erhöhung der Flexibilität des benachbarten inneren Wandbereiches der durchgängige Schlitz zu beiden Seiten mit Bohrabschnitten versehen ist, welche im Durchmesser größer sind als der durch den durchgängigen Schlitz gebildete Spalt. Mit einem derartig geschlossenen, das heißt über eine geschlossene Kontur verfügenden durchgängigen Schlitz kann das Stoppelement sehr schonend an der korrespondierenden Stange geklemmt werden, ohne deren Oberfläche bleibend zu deformieren.

Gemäß einer weiteren Ausführungsform der Erfindung kann der durchgängige Schlitz auch zu einem Ende hin geöffnet ausgeführt sein. Dieses wird durch einen radial den inneren Wandbereich aufbrechenden Schlitzfortsatz erzielt. Diese Maßnahme ist dann anzuwenden, wenn eine höhere Klemmkraft erforderlich ist.

Gemäß einer weiteren im Rahmen der Erfindung liegenden Möglichkeit, kann die Klemmkraft auch durch zwei oder mehrere nebeneinander oder gegenüberliegend angeordnete durchgängige Schlitze im Stoppelement erhöht werden, welchen jeweils eine Schraube zugeordnet ist.

Der innere Querschnitt des Stoppelements kann kreisförmig, oval oder polygonal geformt sein und ist insoweit an den Querschnitt der korrespondierenden Stange anpassbar. Auch andere Querschnittsformen sind denkbar.

Weitere die Erfindung verbessernde Maßnahmen werden nachstehend gemeinsam mit der Beschreibung bevorzugter Ausführungsbeispiele der Erfindung näher dargestellt.

Es zeigt:
- Fig. 1: eine perspektivische Ansicht einer Lineareinheit mit einem erfindungsgemäß ausgebildeten Stoppelement,
- Fig. 2: eine detaillierte perspektivische Ansicht des Stoppelements nach Fig. 1 gemäß einer ersten Ausführungsform, und
- Fig. 3: eine detaillierte perspektivische Ansicht des erfindungsgemäßen Stoppelements gemäß einer weiteren Ausführungsform.

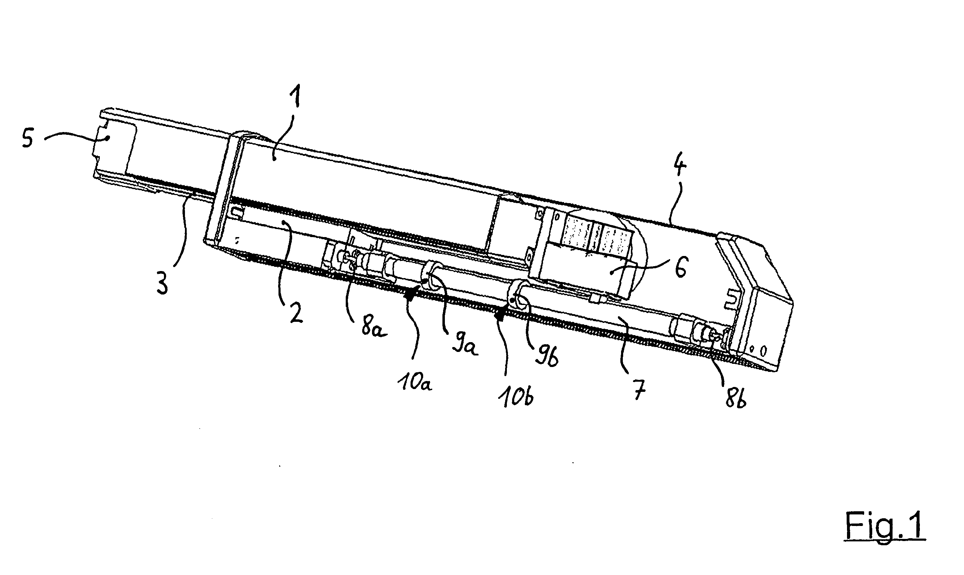

Die Lineareinheit gemäß Fig. 1 besteht aus einem kolbenstangenlosen Pneumatikzylinder 1 mit einem Gleitelement 2, das am Pneumatikzylinder 1 über eine Führungsschiene 3 hin- und herbewegbar geführt ist. Das Gleitelement 3 steht mit einem (hier nicht gezeigten) Kolben des Pneumatikzylinders 1 in Verbindung, um diesen entsprechend einer wechselseitigen Beaufschlagung des innenliegenden Kolbens zu bewegen. Das Gleitelement 2 ist von einem Gehäuse 4 umgeben, derart, dass der Pneumatikzylinder 1 selbst als eine Art Kolbenstange arbeitet. Eine Frontplatte 5 zur Befestigung zusätzlicher Aggregate - beispielsweise einer Dreheinheit - ist zu einem Frontende des Pneumatikzylinders 1 vorgesehen. Der Pneumatikzylinder 1 ist vollständig von dem Gehäuse 4 umgeben, um die innenliegenden Teile vor negativen Umwelteinflüssen zu schützen.

Weiterhin ist eine bewegbare Halteanordnung 6 an dem der Frontplatte gegenüberliegenden Ende des Pneumatikzylinders 1 angeordnet, um die Linearbewegung des Pneumatikzylinders 1 an einer definierbaren Position zu stoppen. Die Halteanordnung 6 ist am Pneumatikyzlinder 1 durch mehrere Schrauben befestigt. Die Halteanordnung 6 wirkt mit einer Abschlagstange 7 zusammen, welche parallel zu der Führungsschiene 3 am Gehäuse 4 angebracht ist. Die Anschlagstange 7 ist ferner mit endseitigen Stoßdämpfern 8a, 8b ausgestattet.

Die Anschlagstange 7 ist mit zwei Stoppelementen 9a, 9b versehen, welche als verstellbare Anschläge in definierten Abständen auf die Anschlagstange 7 montiert sind. Jedes Stoppelement 9 besteht aus einem ringförmigen Metallelement - hier mit einer glatten innenradialen Oberfläche - welches mit einer ebenfalls glatten Außenoberfläche der Anschlagstange 7 durch Klemmen der Schrauben 10a, 10b zusammenwirkt.

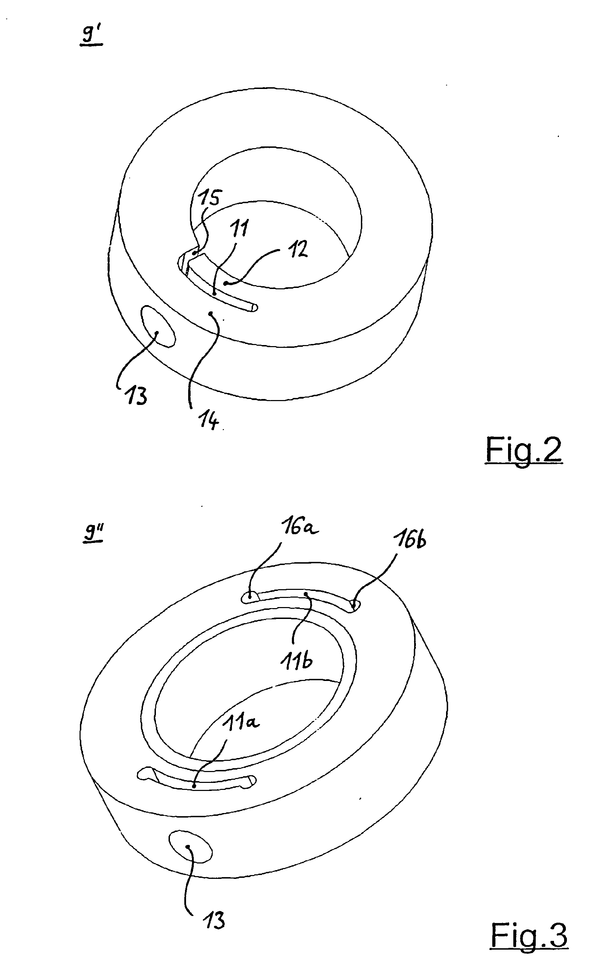

Gemäß Fig. 2 ist das Stoppelement 9' mit einem durchgängigen Schlitz 11 ausgestattet, welcher im wesentlichen parallel zur Längsachse des Stoppelements 9' verläuft und damit einen deformierbaren inneren Wandbereich 12 schafft, welcher gegen die - hier nicht gezeigten - Außenoberfläche der Anschlagstange 7 drückend zur Anlage kommt. Zu diesem Zwecke wird die - ebenfalls nicht gezeigte - Schraube radial in eine Gewindebohrung 13 des benachbarten äußeren Wandabschnittes 14 eingeschraubt. Der durchgängige Schlitz 10 besitzt eine kurvenartige und an die Querschnittsform des Stoppelements 9' angepasste Form und ist ausgehend von einem ringförmigen Metallelement durch Wasserschneiden hergestellt. Zu einem Ende des durchgängigen Schlitzes 10 ist hier ein zusätzlicher Radialschlitz 15 vorgesehen, um insoweit einen offenen, durchgängigen Schlitz 10 zu bilden, so dass die Flexibilität des inneren Wandbereiches 12 erhöht wird.

Gemäß der in der Fig. 3 dargestellten Ausführungsform sind zwei durchgängige Schlitze 11a und 1 1b mit korrespondierenden - ebenfalls nicht dargestellten - Schrauben vorgesehen, welche einander gegenüberliegend am Stoppelement 9" platziert sind. Die durchgängigen Schlitze 11 des Stoppelements 9" sind weiterhin mit endseitigen Bohrungsabschnitten 16a und 16b versehen, welche im Durchmesser größer als die Breite des durchgängigen Schlitz 11 sind, um die Flexibilität des hier geschlossenen inneren Wandbereiches 11 zu erhöhen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So ist die Erfindung beispielsweise auch in Verbindung mit Gewindestangen einsetzbar. Hierfür weist das Stoppelement vorzugsweise ein korrespondierendes Außengewinde auf, so dass Klemmwirkung des Stoppelements in diesem Falle ein ungewolltes Verdrehen des Stoppelements vermieden werden kann, ohne dass zu diesem Zwecke eine zusätzliche Kontermutter erforderlich ist.

### Bezugszeichenliste

- 1.: Pneumatikzylinder
- 2.: Gleitelement
- 3.: Führungsschiene
- 4.: Gehäuse
- 5.: Frontplatte
- 6.: Halteanordnung
- 7.: Anschlagstange
- 8.: Stoßdämpfer
- 9.: Stoppelement
- 10.: Schraube
- 11.: durchgängiger Schlitz
- 12.: innerer Wandbereich
- 13.: Gewindebohrung
- 14.: äußerer Wandbereich
- 15.: Radialschlitz
- 16.: Bohrungsabschnitt

## Patentansprüche

1. Stoppelement zur Montage auf einer Stange (7) für die Bildung eines verstellbaren Anschlages entlang der Stange (7), wobei das Stoppelement (9) aus einem ringförmigen Metallelement mit einer glatten oder ein Gewinde aufweisenden Innenfläche besteht,
**dadurch gekennzeichnet, dass** das Stoppelement (9) mit zumindest einem durchgängigen Schlitz (11) ausgestattet ist, der im wesentlichen parallel zur Längsachse des Stoppelements (9) verläuft, um einen hierdurch gebildeten deformierbaren inneren Wandbereich (12) gegen die Außenfläche der Stange (7) mittels einer Schraube (10) zu pressen, welche radial gerichtet in einen benachbarten äußeren Wandbereich (14) eingeschraubt ist

2. Stoppelement gemäß Anspruch 1,
**dadurch gekennzeichnet, dass** der durchgängige Schlitz (11) kurvenförmig ausgebildet ist, wobei die Kurvenform an den Querschnitt des Stoppelements (9) angepasst ist und über endseitige Bohrungsabschnitte (16a, 16b) verfügt, um die Flexibilität des inneren Wandbereiches 12 zu erhöhen.

3. Stoppelement gemäß Anspruch 1,
**dadurch gekennzeichnet, dass** zu einem Ende des durchgängigen Schlitzes (11) ein zusätzlicher Radialschlitz (15) vorgesehen ist, um einen insoweit offenen durchgängigen Schlitz (11) zu bilden, dessen Öffnung zum inneren Wandbereich (12) hin vorgesehen ist, um die Flexibilität des inneren Wandbereichs (12) zu erhöhen.

4. Stoppelement gemäß einem der vorstehenden Ansprüche,
**dadurch gekennzeichnet, dass** genau zwei durchgängige Schlitze (11a, 11b) mit zugeordneten Schrauben einander gegenüberliegend am Stoppelement (9") vorgesehen sind, um die Klemmkraft des Stoppelements (9") zu erhöhen.

5. Stoppelement gemäß einem der vorstehenden Ansprüche,
**dadurch gekennzeichnet, dass** der durchgängige Schlitz (11) durch Wasserschneiden aus einem ringförmigen Metallelement hergestellt ist.

6. Stoppelement gemäß einem der vorstehenden Ansprüche,
**dadurch gekennzeichnet, dass** die innere Querschnittsfläche des Stoppelements (9) rund, oval oder polygonal ausgeführt ist und an den Querschnitt der korrespondierenden Stange (7) angepasst ist.

7. Lineareinheit zur Erzeugung einer mechanischen Kraft mit einem Pneumatikzylinder (1) der mit einer Anschlagstange (7) zur Definition zumindest einer Stopposition entlang des Kolbenhubes des Pneumatikzylinders (1) zusammenwirkt,
**dadurch gekennzeichnet, dass** ein Stoppelement (9) gemäß einem der vorstehenden Ansprüche vorgesehen ist, welches an der Anschlagstange (7) montiert ist, um einen verstellbaren Anschlag entlang der Anschlagstange (7) zu schaffen.

8. Pneumatikzylinder zur Erzeugung einer mechanischen Kraft, der mit einer Kolbenstange ausgerüstet ist,
**dadurch gekennzeichnet, dass** ein Stoppelement (9) gemäß einem der Ansprüche 1 bis 6 vorgesehen ist, das direkt auf der Kolbenstange des Pneumatikzylinders montiert ist, um einen verstellbaren Endanschlag für den Kolbenhub zu bilden.

## Claims

1. A stop element for mounting on a rod (7) to form an adjustable end stop along the rod (7), wherein the stop element (9) comprises an annular metal element with a smooth or threaded inside surface,
**characterized in that** said stop element (9) is provided with at least one through slot (11) extending essentially parallel to the longitudinal axis of said stop element (9) in order to press a deformable inner wall section (12) thus formed against the outer surface of said rod (7) by means of a screw (10), which is screwed into a neighbouring outer wall section (14) in a radial direction.

2. The stop element according to claim 1,
**characterized in that** said through slot (11) has a curved configuration, wherein said curved configuration is adapted to the cross-section of said stop element (9) and comprises bored portions (16a, 16b) at its ends in order to increase the flexibility of the inner wall section (12).

3. The stop element according to claim 1,
**characterized in that** an additional radial slot (15) is provided at one end of said through slot (11) to form a correspondingly open through slot (11) having its opening toward the inner wall section (12) to increase the flexibility of the inner wall section (12).

4. The stop element according to any one of the preceding claims,
**characterized in that** exactly two through slots (11 a, 11 b) are provided with associated screws opposite each other on the stop element (9") to increase the clamping force of the stop element (9").

5. The stop element according to any one of the preceding claims,
**characterized in that** the through slot (11) is made of an annular metal element by water cutting.

6. The stop element according to any one of the preceding claims,
**characterized in that** the inner cross-sectional area of the stop element (9) is round, oval-shaped or polygonal and adapted to the cross-section of the corresponding rod (7).

7. A linear unit for generating a mechanical force, comprising a pneumatic cylinder (1), which cooperates with a stop rod (7) to define at least one stop position along the piston stroke of the pneumatic cylinder (1),
**characterized in that** a stop element (9) is provided, according to any one of the preceding claims, which is mounted on said stop rod (7) in order to create an adjustable end stop along said stop rod (7).

8. A pneumatic cylinder for generating a mechanical force and equipped with a piston rod,
**characterized in that** a stop element (9) is provided, according to any one of claims 1 to 6, which is mounted directly on said piston rod of said pneumatic cylinder to form an adjustable end stop for the piston stroke.

## Revendications

1. Élément d'arrêt pour le montage sur une tige (7) pour réaliser une butée réglable le long de la tige (7), ledit élément d'arrêt (9) étant constitué par un élément métallique de forme annulaire avec une surface intérieure lisse ou présentant un taraudage, **caractérisé en ce que** l'élément d'arrêt (9) est pourvu d'au moins une fente (11) traversante qui s'étend sensiblement parallèlement à l'axe longitudinal de l'élément d'arrêt (9) afin de presser une zone de paroi intérieure (12) ainsi formée, contre la surface extérieure de la tige (7) au moyen d'une vis (10) qui est vissée en direction radiale dans une zone de paroi extérieure voisine (14).

2. Élément d'arrêt selon la revendication 1,
**caractérisé en ce que** la fente traversante (11) est réalisée sous forme incurvée, la forme incurvée étant adaptée à la section transversale de l'élément d'arrêt (9) et présentant des tronçons de perçage (16a, 16b) du côté terminal afin d'augmenter la flexibilité de la zone de paroi intérieure (12).

3. Élément d'arrêt selon la revendication 1, **caractérisé en ce qu'**il est prévu à une extrémité de la fente traversante (11) une fente radiale supplémentaire (15) pour former une fente traversante (11) et ouverte à cet égard, dont l'ouverture est prévue vers la zone de paroi intérieure (12) afin d'augmenter la flexibilité de la zone de paroi intérieure (12).

4. Élément d'arrêt selon l'une des revendications précédentes,
**caractérisé en ce qu'**il est prévu exactement deux fentes traversantes (11a, 11b) avec des vis associées en opposition mutuelle sur l'élément d'arrêt (9") afin d'augmenter la force de serrage de l'élément d'arrêt (9").

5. Élément d'arrêt selon l'une des revendications précédentes,
**caractérisé en ce que** la fente traversante (11) est produite par hydrocoupage à partir d'un élément métallique de forme annulaire.

6. Élément d'arrêt selon l'une des revendications précédentes,
**caractérisé en ce que** la surface de section intérieure de l'élément d'arrêt (9) est réalisée ronde, ovale ou polygonale et adaptée à la section transversale de la tige correspondante (7).

7. Unité linéaire pour engendrer une force mécanique avec un cylindre pneumatique (1) qui coopère avec une tige de butée (7) pour définir au moins une position d'arrêt le long de la course du piston du cylindre pneumatique (1),
**caractérisé en ce qu'**il est prévu un élément d'arrêt (9) selon l'une des revendications précédentes, lequel est monté sur la tige de butée (7) pour constituer une butée réglable le long de la tige de butée (7).

8. Cylindre pneumatique pour engendrer une force mécanique, qui est équipé d'une tige de piston et,
**caractérisé en ce qu'**il est prévu un élément d'arrêt (9) selon l'une des revendications 1 à 6, qui est monté directement sur la tige de piston du cylindre pneumatique afin de former une butée finale réglable pour la course du piston.
